# EUROPEAN PATENT APPLICATION

(11) **EP 2 199 746 A2**
(43) Date of publication of application: **23.06.2010**
(21) Application number: 09177806.8
(22) Date of filing: 02.12.2009
(51) Int. Cl.: G01C 23/00

(54) **System and method for rendering aircraft traffic on a vertical situation display**

(30) Priority: 17.12.2008 US 337253
(71) Applicant: Honeywell International Inc., Morristown, NJ 07962 (US)
(72) Inventor: DAS, Sanjib Kumar, Morristown, NJ 07962-2245 (US)
(74) Representative: Buckley, Guy Julian

(57) **Abstract**

A flight deck display element for a host aircraft is used to render a dynamic vertical situation display (VSD). The VSD includes a graphical representation of the host aircraft, graphical representations of one or more neighboring aircraft, and a graphical representation of a conflict zone surrounding the graphical representation of the host aircraft. The graphical representations of the neighboring aircraft are positioned on the VSD in a manner that indicates the respective altitudes of the neighboring aircraft relative to the host aircraft. They are also positioned on the VSD in a manner that indicates the respective lateral separation of the neighboring aircraft relative to the host aircraft.

## Description

### TECHNICAL FIELD

Embodiments of the subject matter described herein relate generally to avionics systems such as flight display systems. More particularly, embodiments of the subject matter relate to a vertical situation display.

### BACKGROUND

A vertical situation display (VSD) usually provides a two-dimensional representation of an aircraft, the aircraft vertical flight plan, and terrain under the aircraft or projected aircraft track. Practical VSDs typically include a number of parameters and visual indicators that enable the pilot to form a quick mental picture of the vertical situation of the host aircraft. For example, VSDs may include displays of an aircraft symbol, the aircraft altitude, the vertical flight plan, the selected altitude, and the terrain. The VSD is usually displayed in close proximity to a lateral map display, such that the vertical situation of the aircraft can be coordinated visually with the lateral situation of the aircraft. In a practical deployment, the VSD may be included in a primary flight display, a multifunction display, or other suitable display component on the aircraft. VSD systems are designed to prevent controlled flight into terrain by providing a display of the terrain relative to the present altitude of the aircraft. In this regard, a member of the aircraft flight crew can obtain information related to the vertical situation of the aircraft relative to the terrain with a simple glance at the VSD.

Most conventional VSDs do not display air traffic in the vicinity of the host aircraft. In other words, conventional VSDs focus on the vertical situation of the host aircraft, while other onboard systems remain responsible for air traffic, collision detection, avoidance warnings, and the like.

### BRIEF SUMMARY

A flight deck display system for a host aircraft is provided. The system includes an aircraft-to-aircraft data communication module that receives current status data for one or more neighboring aircraft, a processor architecture coupled to the aircraft-to-aircraft data communication module, and a display element coupled to the processor architecture. The processor architecture is configured to obtain and process the current status data along with current host aircraft status data. The processor architecture is also configured to generate image rendering display commands based upon the current status data and the current host aircraft status data. The display element is configured to receive the image rendering display commands and, in response thereto, render a vertical situation display (VSD) that includes graphical representations of the host aircraft and the one or more neighboring aircraft. These graphical representations convey the relative altitudes of the host aircraft and the one or more neighboring aircraft.

A method for displaying aircraft traffic information on a display element of an aircraft flight deck system of a host aircraft is also provided. The method obtains current status data for the host aircraft and for one or more neighboring aircraft. The method generates, based upon the current status data, image rendering commands corresponding to a VSD for the host aircraft. The VSD is rendered on the display element in a graphical form. The VSD includes an altitude scale for the host aircraft and the neighboring aircraft, a lateral distance scale for the host aircraft and the neighboring aircraft, graphical representations of the host aircraft and the neighboring aircraft positioned relative to the altitude scale and the lateral distance scale in accordance with the current status data, and a visually distinguishable conflict zone surrounding the graphical representation of the host aircraft.

A flight deck display element for a host aircraft is also provided. The flight deck display element renders a dynamic VSD that includes a graphical representation of the host aircraft, along with graphical representations of one or more neighboring aircraft. These graphical representations are positioned on the VSD in a manner that indicates the respective altitudes of the neighboring aircraft relative to the host aircraft, and positioned on the VSD in a manner that indicates the respective lateral separation of the neighboring aircraft relative to the host aircraft. The VSD also contains a graphical representation of a conflict zone surrounding the graphical representation of the host aircraft.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a schematic representation of an embodiment of a flight deck display system;

FIG. 2 is a flow diagram that illustrates an exemplary embodiment of a display process suitable for use with a flight deck display system; and

FIGS. 3-7 are schematic representations of exemplary flight deck display screens having VSDs rendered thereon.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

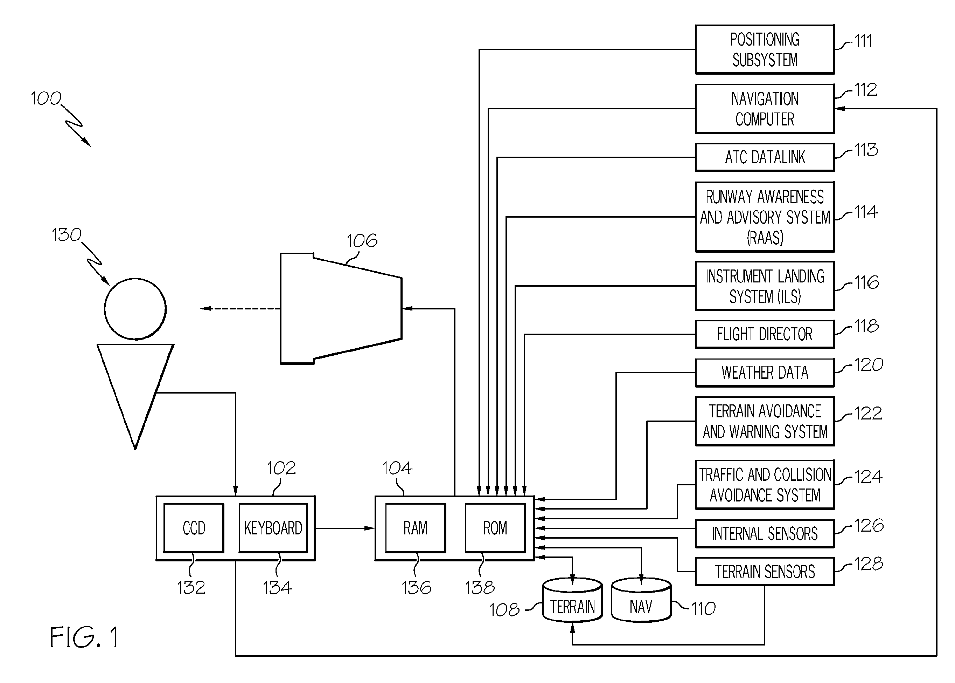

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one exemplary arrangement of elements, additional intervening elements, devices, features, or components may be present in an embodiment of the depicted subject matter.

The subject matter described herein relates to a display system and associated operating methodologies for rendering a VSD for a host aircraft. With the emergence of the concept of "free flight" and automatic dependent surveillance broadcast (ADS-B) techniques, the bulk of the responsibility for navigation is returning to the pilot. In a free flight scenario, the pilot is free to fly a route that is most efficient, while the air traffic controllers monitor that progress and intervene only as necessary to ensure adequate separation between aircraft. Thus, the pilot is free to fly a route ensured by the different air traffic controllers across the different regions of the airspace and ground stations will retain indirect control over the flight path. In such an environment the pilot must anticipate air traffic conflicts and develop maneuvering strategies as needed. Hence two very important considerations related to the display of traffic information in the cockpit will be: (1) situational awareness, both laterally and vertically; and (2) precise traffic and conflict warnings and indications for enhanced safety and security of the flight. The VSD described here will help the pilot anticipate and confirm dangers in the situational awareness, if any - initially as an alert from the system (or a visual interpretation by the pilot) and then a confirmation of the same by communicating with peers or the ground stations.

A VSD as described herein employs a new display format that will help address the future challenges in air traffic management and free flight safety. This new display format can provide complete situational awareness to the pilot based on air-to-air surveillance technologies such as ADS-B and other peer-to-peer communication protocols. In this context, a traffic supportive vertical display format will provide the pilot a better awareness of the situation and help the pilot anticipate any potential traffic conflicts. Moreover, as described in more detail below, the new VSD preferably includes a visually distinguishable "conflict zone" that helps indicate whether or not an actual vertical profile conflict might occur, based upon projected flight paths of the host aircraft and neighboring aircraft.

FIG. 1 depicts an exemplary flight deck display system 100 that generally includes, without limitation: a user interface 102; a processor architecture 104 coupled to user interface 102; and a display element 106 coupled to processor architecture 104. System 100 may also include, cooperate with, and/or communicate with a number of databases, sources of data, or the like. Moreover, system 100 may include, cooperate with, and/or communicate with a number of external subsystems as described in more detail below. For example, processor architecture 104 may cooperate with one or more of the following components, features, data sources, and subsystems, without limitation: one or more terrain databases 108; one or more navigation databases 110; a positioning subsystem 111; a navigation computer 112; an air traffic control (ATC) datalink 113; a runway awareness and advisory system (RAAS) 114; an instrument landing system (ILS) 116; a flight director 118; a source of weather data 120; a terrain avoidance and warning system (TAWS) 122; a traffic and collision avoidance system (TCAS) 124; one or more inertial sensors 126; and one or more terrain sensors 128.

User interface 102 is in operable communication with processor architecture 104 and is configured to receive input from a user 130 (e.g., a pilot) and, in response to the user input, supply command signals to processor architecture 104. User interface 102 may be any one, or combination, of various known user interface devices including, but not limited to, a cursor control device (CCD) 132, such as a mouse, a trackball, or joystick, one or more buttons, switches, or knobs. In the depicted embodiment, user interface 102 includes CCD 132 and a keyboard 134. The user 130 manipulates CCD 132 to, among other things, move cursor symbols that might be rendered at various times on display element 106, and the user 130 may manipulate keyboard 134 to, among other things, input textual data. As depicted in FIG. 1, user interface 102 may also be utilized to enable user interaction with navigation computer 112, the flight management system, and/or other features and components of the aircraft.

Processor architecture 104 may utilize one or more known general-purpose microprocessors or an application specific processor that operates in response to program instructions. In the depicted embodiment, processor architecture 104 includes or communicates with onboard RAM (random access memory) 136, and onboard ROM (read only memory) 138. The program instructions that control processor architecture 104 may be stored in either or both RAM 136 and ROM 138. For example, the operating system software may be stored in ROM 138, whereas various operating mode software routines and various operational parameters may be stored in RAM 136. It will be appreciated that this is merely exemplary of one scheme for storing operating system software and software routines, and that various other storage schemes may be implemented. It will also be appreciated that processor architecture 104 may be implemented using various other circuits, not just a programmable processor. For example, digital logic circuits and analog signal processing circuits could also be used.

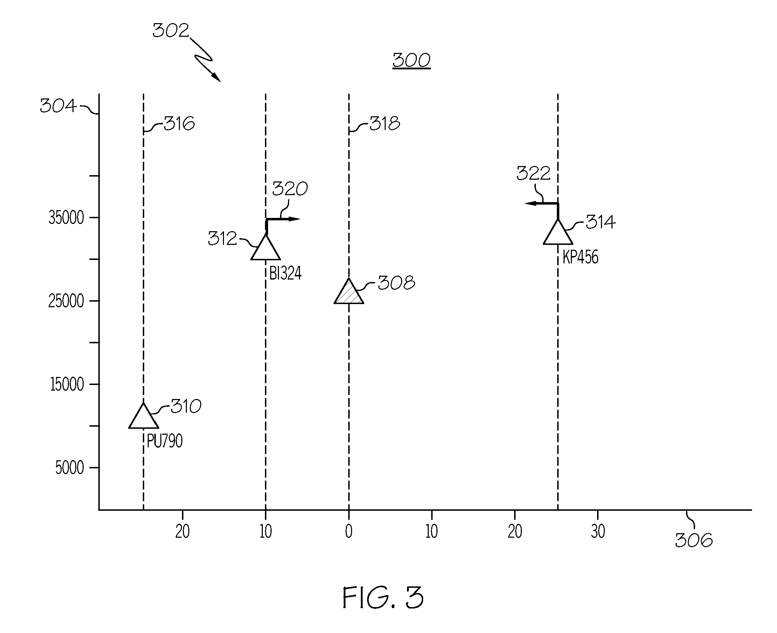

Processor architecture 104 is in operable communication with terrain database 108, navigation database 110, and display element 106, and is coupled to receive various types of data, information, commands, signals, etc., from the various sensors, data sources, instruments, and subsystems described herein. For example, processor architecture 104 is suitably configured to obtain and process avionics-related data, current aircraft status data, geographic position data, flight plan data, altitude data, and/or other data that is utilized by system 100 to generate and render VSDs having the features and elements mentioned below with reference to FIGS. 3-7.

In certain embodiments, processor architecture 104 is configured to respond to inertial data obtained by inertial sensors 126 to selectively retrieve terrain data from terrain database 108 or terrain sensor 128 and navigation data from navigation database 110. Processor architecture 104 can also supply appropriate display commands to display element 106, so that VSDs can be appropriately displayed on display element 106. In this regard, processor architecture 104 is suitably configured to receive current status data for the host aircraft and for neighboring aircraft (other than the host aircraft) and, based upon that data, generate image rendering display commands associated with the display of aircraft traffic on the VSDs. The preferred manner in which the VSDs are rendered will be described in more detail further below.

Display element 106 is used to display various images and data, in both a graphical and a textual format, and to supply visual feedback to the user 130 in response to the user input commands supplied by the user 130 to user interface 102. It will be appreciated that display element 106 may be any one of numerous known displays suitable for rendering image and/or text data in a format viewable by the user 130. Nonlimiting examples of such displays include various cathode ray tube (CRT) displays, and various flat panel displays such as, various types of LCD (liquid crystal display), OLED, and TFT (thin film transistor) displays. Display element 106 may additionally be based on a panel mounted display, a HUD projection, or any known technology. In an exemplary embodiment, display element 106 includes a panel display, and display element 106 is suitably configured to receive image rendering commands from processor architecture 104 and, in response thereto, display element 106 renders a VSD that includes graphical representations of the host aircraft and one or more neighboring aircraft, where the graphical representations are positioned such that they convey relative altitudes of the aircraft. To provide a more complete description of the operating method that is implemented by system 100, a general description of display element 106 and various graphical features rendered thereon will provided below with reference to FIGS. 3-7.

As FIG. 1 shows, processor architecture 104 is in operable communication with the source of weather data 120, TAWS 122, and TCAS 124, and is additionally configured to generate, format, and supply appropriate display commands to display element 106 so that the avionics data, weather data 120, data from TAWS 122, data from TCAS 124, and data from the previously mentioned external systems may also be selectively rendered in graphical form on display element 106. The data from TCAS 124 can include Automatic Dependent Surveillance Broadcast (ADS-B) messages. In this regard, TCAS 124 may include or cooperate with an ADS-B receiver, an ADS-B transponder, and/or any suitably configured aircraft-to-aircraft data communication module that receives current status data for one or more neighboring aircraft. The communication module also transmits status data of the host aircraft to other aircraft in its vicinity.

Terrain database 108 includes various types of data, including elevation data, representative of the terrain over which the aircraft is flying. The terrain data can be used to generate a three dimensional perspective view of terrain in a manner that appears conformal to the earth. The data in terrain database 108 can be pre-loaded by external data sources or provided in real-time by terrain sensor 128. Terrain sensor 128 provides real-time terrain data to processor architecture 104 and/or terrain database 108. In one embodiment, terrain data from terrain sensor 128 is used to populate all or part of terrain database 108, while in another embodiment, terrain sensor 128 provides information directly, or through components other than terrain database 108, to processor architecture 104.

In another embodiment, terrain sensor 128 can include visible, low-light TV, infrared, lidar, or radar-type sensors that collect and/or process terrain data. For example, terrain sensor 128 can be a radar sensor that transmits radar pulses and receives reflected echoes, which can be amplified to generate a radar signal. The radar signals can then be processed to generate three-dimensional orthogonal coordinate information having a horizontal coordinate, vertical coordinate, and depth or elevation coordinate. The coordinate information can be stored in terrain database 108 or processed for display on display element 106.

In one embodiment, the terrain data provided to processor architecture 104 is a combination of data from terrain database 108 and terrain sensor 128. For example, processor architecture 104 can be programmed to retrieve certain types of terrain data from terrain database 108 and other certain types of terrain data from terrain sensor 128. In one embodiment, terrain data retrieved from terrain sensor 128 can include moveable terrain, such as mobile buildings and systems. This type of terrain data is better suited for terrain sensor 128 to provide the most up-to-date data available. For example, types of information such as waterbody information and geopolitical boundaries can be provided by terrain database 108. When terrain sensor 128 detects, for example, a waterbody, the existence of such can be confirmed by terrain database 108 and rendered in a particular color such as blue by processor architecture 104.

Navigation database 110 includes various types of navigation-related data stored therein. In preferred embodiments, navigation database 110 is an onboard database that is carried by the aircraft. The navigation-related data include various flight plan related data such as, for example, and without limitation: waypoint location data for geographical waypoints; distances between waypoints; track between waypoints; the vertical profile of the host aircraft; data related to different airports; navigational aids; obstructions; special use airspace; restricted, constrained, or target altitude/airspeed values corresponding to special use airspace; political boundaries; communication frequencies; and aircraft approach information.

Although terrain database 108 and navigation database 110 are, for clarity and convenience, shown as being stored separate from processor architecture 104, all or portions of either or both of these databases 108, 110 could be loaded into the onboard RAM 136, stored in ROM 138, or integrally formed as part of processor architecture 104. Terrain database 108 and navigation database 110 could also be part of a device or system that is physically separate from system 100.

Positioning subsystem 111 is suitably configured to obtain position data for the aircraft. In practice, positioning subsystem 111 monitors the current position of the aircraft in real-time, and the real-time position data can be used by one or more other subsystems, processing modules, or equipment on the aircraft (e.g., navigation computer 112, RAAS 114, ILS 116, flight director 118, TAWS 122, or TCAS 124). In certain embodiments, positioning subsystem 111 is realized using global positioning system (GPS) technologies that are commonly deployed in avionics applications. Thus, the position data obtained by positioning subsystem 111 may represent the latitude and longitude of the aircraft in an ongoing and continuously updated manner.

The avionics data that is supplied from inertial sensors 126 includes data representative of the state of the aircraft such as, for example, aircraft speed, altitude, and heading. Inertial sensors 126 can include MEMS-based, ADHRS-related, or any other type of inertial sensor. Inertial sensors 126 may include at least one sensor that is suitably configured to obtain altitude data for the aircraft, where the altitude data represents the current real-time altitude of the aircraft. As understood by those familiar with avionics instruments, the altitude data is preferably updated in a continuous and ongoing manner.

The weather data 120 supplied to processor architecture 104 is representative of at least the location and type of various weather cells. The data supplied from TCAS 124 includes data representative of other aircraft in the vicinity, which may include, for example, speed, direction, altitude, and altitude trend. In a preferred embodiment, processor architecture 104, in response to the TCAS data, supplies appropriate display commands to display element 106 such that a graphic representation of each aircraft in the vicinity is displayed on display element 106. TAWS 122 supplies data representative of the location of terrain that may be a threat to the aircraft. Processor architecture 104, in response to the TAWS data, preferably supplies appropriate display commands to display element 106 such that the potential threat terrain is displayed in various colors depending on the level of threat. For example, red is used for warnings (immediate danger), yellow is used for cautions (possible danger), and green is used for terrain that is not a threat. It will be appreciated that these colors and number of threat levels are merely exemplary, and that other colors and different numbers of threat levels can be provided as a matter of choice.

As was previously alluded to, one or more other external systems (or subsystems) may also provide avionics-related data to processor architecture 104 for display on display element 106. In the depicted embodiment, these external systems include a flight director 118, an instrument landing system (ILS) 116, a runway awareness and advisory system (RAAS) 114, and a navigation computer 112. Flight director 118, as is generally known, supplies command data representative of commands for piloting the aircraft in response to flight crew entered data, or various inertial and avionics data received from external systems. The command data supplied by flight director 118 may be supplied to processor architecture 104 and displayed on display element 106 for use by the user 130, or the data may be supplied to an autopilot (not illustrated). The autopilot, in turn, produces appropriate control signals that cause the aircraft to fly in accordance with the flight crew entered data, or the inertial and avionics data.

ILS 116 is a radio navigation system that provides the aircraft with horizontal and vertical guidance just before and during landing and, at certain fixed points, indicates the distance to the reference point of landing. The system includes ground-based transmitters (not shown) that transmit radio frequency signals. ILS 116 onboard the aircraft receives these signals and supplies appropriate data to the processor for display of, for example, an ILS feather (not shown in FIG. 1) on the display element 106. The ILS feather represents two signals, a localizer signal that is used to provide lateral guidance, and a glide slope signal that is used for vertical guidance.

RAAS 114 provides improved situational awareness to help lower the probability of runway incursions by providing timely aural advisories to the flight crew during taxi, takeoff, final approach, landing and rollout. RAAS 114 uses GPS data to determine aircraft position and compares aircraft position to airport location data stored in navigation database 110. Based on these comparisons, RAAS 114, if necessary, issues appropriate aural advisories. Aural advisories, which may be issued by RAAS 114, inform the user 130, among other things of when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user 130 inadvertently begins to take off from a taxiway, and when an aircraft has been immobile on a runway for an extended time. During approach, data from sources such as GPS, including RNP and RNAV, can also be considered.

Navigation computer 112 is used, among other things, to allow the user 130 to program a flight plan from one destination to another. Navigation computer 112 may be in operable communication with flight director 118. As was mentioned above, flight director 118 may be used to automatically fly, or assist the user 130 in flying, the programmed route. Navigation computer 112 is in operable communication with various databases including, for example, terrain database 108, and navigation database 110. Processor architecture 104 may receive the programmed flight plan data from navigation computer 112 and cause the programmed flight plan, or at least portions thereof, to be displayed on display element 106.

ATC datalink 113 is utilized to provide air traffic control data to system 100, preferably in compliance with known standards and specifications. Using ATC datalink, processor architecture 104 can receive air traffic control data from ground based air traffic controller stations and equipment. In turn, system 100 can utilize such air traffic control data as needed.

In operation, a flight deck display system as described herein is suitably configured to process current status data for the host aircraft and for neighboring aircraft that might be in the vicinity of the host aircraft. As mentioned above, the flight deck display system of the host aircraft preferably includes an aircraft-to-aircraft data communication module (e.g., a module compliant with ADS-B) that can receive the current status data from neighboring aircraft in a peer-to-peer manner. Moreover, the host aircraft can obtain and process its own status data using various onboard subsystems and data sources. The current status data for a given aircraft may include, without limitation: flight plan data; geographic position data; altitude data; airspeed data; turning direction data; or the like. In response to the current status data, the display system can generate and display an appropriately formatted VSD on its display element. In practice, the new VSD features described here can be incorporated into an existing flight deck display system and/or implemented as a separate display element, as desired.

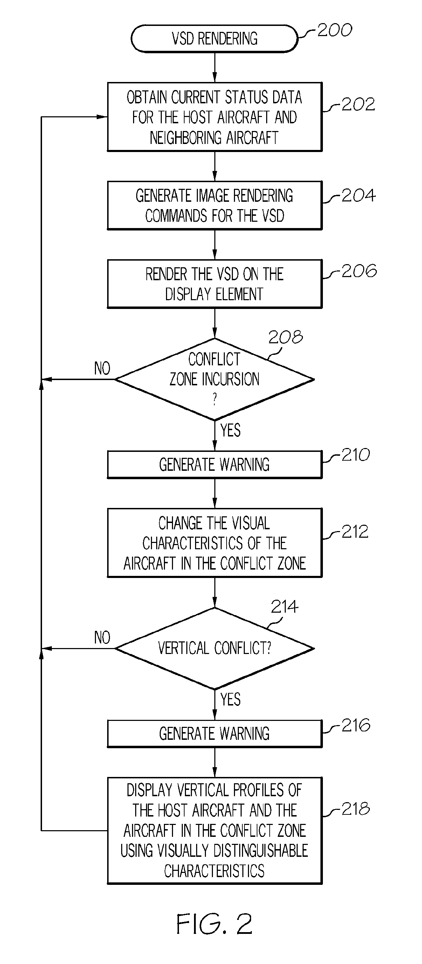

In this regard, FIG. 2 is a flow diagram that illustrates an exemplary embodiment of a VSD rendering/display process 200 suitable for use with a flight deck display system such as system 100. The various tasks performed in connection with process 200 may be performed by software, hardware, firmware, or any combination thereof. For illustrative purposes, the following description of process 200 may refer to elements mentioned above in connection with FIG. 1. In practice, portions of process 200 may be performed by different elements of the described system, e.g., a data communication module, a processor component, a graphics engine or driver, or a display element. It should be appreciated that process 200 may include any number of additional or alternative tasks, the tasks shown in FIG. 2 need not be performed in the illustrated order, and process 200 may be incorporated into a more comprehensive procedure or process having additional functionality not described in detail herein.

In practice, process 200 can be performed in a virtually continuous manner at a relatively high refresh rate. For example, an iteration of process 200 could be performed once every two seconds (or less) such that the VSD will be updated in real-time or substantially real time in a dynamic manner. This particular embodiment of process 200 begins by obtaining the current status data for the host aircraft and for one or more neighboring aircraft (task 202). In preferred embodiments, the current status data for the neighboring aircraft is obtained using an appropriate aircraft-to-aircraft data communication technology and related subsystem components located onboard the host aircraft. The current status data for the host and neighboring aircraft is then processed in an appropriate manner to generate applicable image rendering commands that correspond to the VSD for the host aircraft (task 204). The image rendering commands are based upon or otherwise influenced by the current status data - the graphical display characteristics of the VSD are dependent upon the current status data, namely, the geographic position data of the host aircraft.

The image rendering commands are then used to control the rendering of the VSD on a display element (task 206). Certain features of the VSD may be displayed in accordance with preferences, options, or selections chosen by the pilot. For example, a vertical flight path might be displayed on a time basis chosen by the pilot. The selected time period or window will restrict the travelled distance based on the speed of the aircraft and also the vertical path. Moreover, a VSD image that shows conflicting vertical flight paths might not represent an actual time-based scenario. The time selection option can be made available in all the modes of display where a vertical path is displayed.

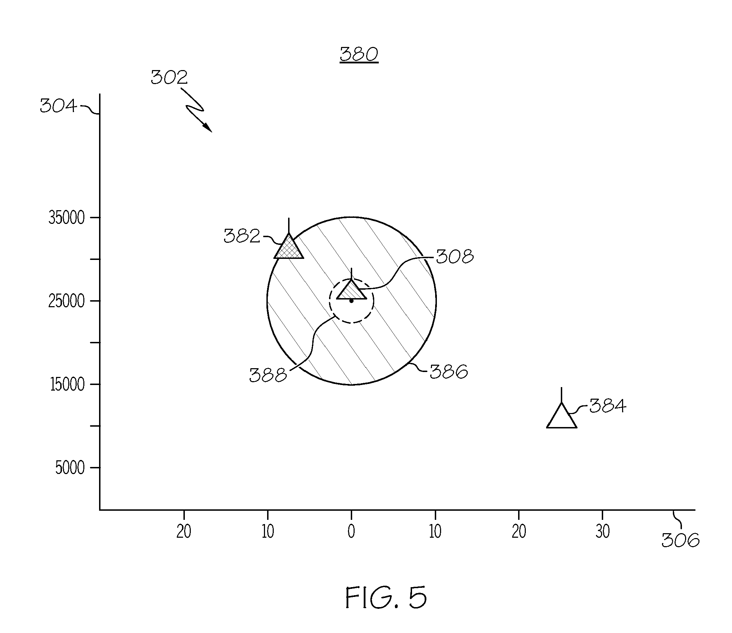

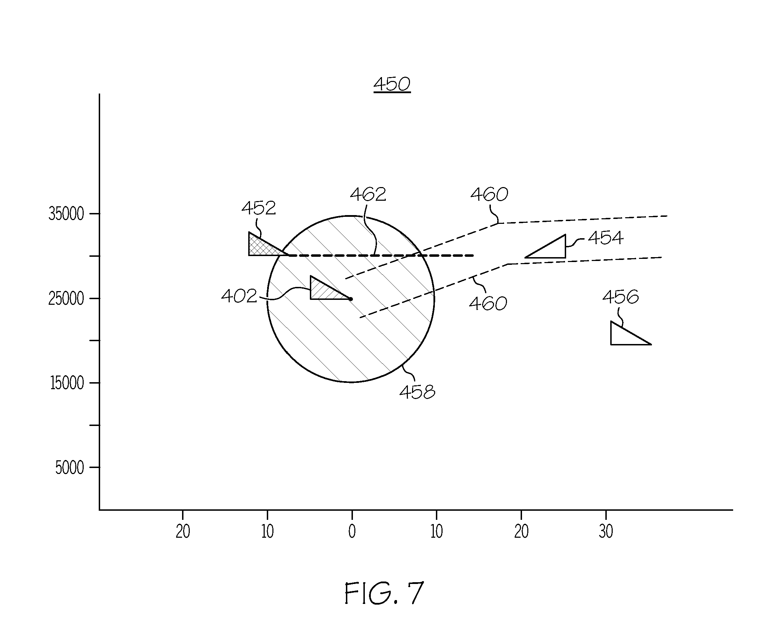

As explained below with reference to FIGS. 5 and 7, the VSD preferably includes a visually distinguishable conflict zone that is rendered such that is surrounds the graphical representation of the host aircraft. This conflict zone may represent a designated airspace around the host aircraft, e.g., a spherical zone having a radius of ten nautical miles. It should be appreciated that the conflict zone, can be of any shape, e.g., spherical, parallelepiped, or cuboid, based on desired safety requirements, traffic zones, etc. As explained in more detail below, process 200 can treat neighboring aircraft outside of the conflict zone as safe and nonthreatening aircraft. On the other hand, neighboring aircraft that are within the conflict zone might represent a possible threat and/or traffic that could conflict with the intended vertical flight plan of the host aircraft.

If process 200 detects a conflict zone incursion (query task 208), which occurs when a neighboring aircraft enters the defined conflict zone, then one or more flight deck subsystems will generate an appropriate warning (task 210) that indicates the presence of that neighboring aircraft within the conflict zone. If query task 208 does not detect a conflict zone incursion, then process 200 exits or returns to task 202 to resume processing and refresh the current status data. In practice, the warning generated during task 210 may be, without limitation: an audible alert, alarm, or message; a visual alert, alarm, or message; or the like. Indeed, a visual warning could be rendered on the VSD itself. In preferred embodiments, the VSD will render the graphical representation of the conflicting aircraft at least partially within the displayed conflict zone (see FIG. 5), and will render the graphical representation of the conflicting aircraft with visually distinguishable characteristics, relative to the graphical representations of neighboring aircraft that are outside of the conflict zone. Moreover, the VSD will render the graphical representation of the conflicting aircraft with visually distinguishable characteristics, relative to the graphical representation of the host aircraft. Thus, when a neighboring aircraft icon is at least partially displayed within the rendered conflict zone, process 200 will change the visual characteristics of that neighboring aircraft icon so that the user will be able to easily detect the conflict condition. In this regard, the different visually distinguishable characteristics may correspond to any of the following characteristics, individually or in any combination thereof: different colors; different brightness; different transparency levels; different translucency levels; different line patterns; different line thickness; different shapes; different sizes; different flicker patterns; different focus levels; different sharpness levels; different clarity levels; and different orientation/alignment. In preferred embodiments, for example, the graphical representation of a neighboring aircraft changes from its nominal color to amber or orange when it enters the conflict zone.

Process 200 may also monitor for potential vertical (altitude) conflicts with neighboring aircraft. The aircraft-to-aircraft data communication capability of the onboard systems enables process 200 to determine in real-time (or substantially real-time) whether the current flight plan of the host aircraft might vertically conflict with the current flight plan of a neighboring aircraft. In this regard, one or more subsystems onboard the host aircraft are suitably configured to analyze the current status data of the host aircraft and the neighboring aircraft for purposes of predicting or projecting whether or not the vertical profile of a neighboring aircraft conflicts with the vertical profile of the host aircraft within the designated conflict zone. Note that this feature also contemplates a situation where an aircraft is approaching at a very high speed but is not presently within the defined conflict zone. The system can be suitably configured to determine whether such an approaching aircraft seems to have a conflicting path ahead with the host aircraft, intersecting within the conflict zone. Accordingly, process 200 checks whether a vertical conflict might occur within the conflict zone (query task 214). This check is desirable because a neighboring aircraft within the conflict zone could be on a flight plan that is divergent from the flight plan of the host aircraft. For example, if a neighboring aircraft is at a current altitude of 10,000 feet and climbing, while the host aircraft is at a current altitude of 9,400 feet and descending, then there will be no actual vertical conflict even though that neighboring aircraft might be within the conflict zone of the host aircraft. On the other hand, if the vertical profiles of the neighboring aircraft and the host aircraft intersect within the conflict zone (as depicted in FIG. 7), then the VSD can alert the pilot in an appropriate manner so that the pilot can take corrective measures if needed.

Referring again to FIG. 2, if query task 214 detects a vertical conflict within the conflict zone, then one or more flight deck subsystems will generate an appropriate warning (task 216) that indicates a potential vertical conflict. If query task 214 does not detect a vertical conflict, then process 200 exits or returns to task 202 to resume processing and refresh the current status data. In practice, the warning generated during task 216 may be, without limitation: an audible alert, alarm, or message; a visual alert, alarm, or message; or the like. Indeed, a visual warning could be rendered on the VSD itself.

In preferred embodiments, the VSD will display the vertical profiles of the host aircraft and the vertically conflicting aircraft using visually distinguishable characteristics (task 218). For example, the VSD could render indicia of the vertical profile corresponding to the flight plan of the host aircraft using a first visually distinguishable characteristic, while rendering indicia of the vertical profile corresponding to the flight plan of the conflicting aircraft using a second visually distinguishable characteristic (see FIG. 7). In certain embodiments, the VSD can also render the graphical representation of the conflicting aircraft in a manner that is visually distinguishable from the graphical representation of the host aircraft, the graphical representations of neighboring aircraft outside of the conflict zone, and the graphical representations of neighboring aircraft that are within the conflict zone but are not vertically conflicting. In this regard, the different visually distinguishable characteristics may correspond to any of the characteristics mentioned above with reference to task 212. In preferred embodiments, for example, the graphical representation of a vertically conflicting aircraft changes from its nominal color (or from amber or orange) to red.

Following task 218, process 200 exits or returns to task 202 to resume processing and refresh the current status data. In this manner, process 200 can be repeated indefinitely and at any practical rate to support continuous and dynamic updating and refreshing of the VSD. Frequent updating of the VDS enables the flight crew to obtain the current vertical situation and conflict status in virtually real-time.

As one example, FIG. 3 is a schematic representation of a flight deck display screen having an exemplary VSD 300 rendered thereon. VSD 300 generally includes, without limitation: a primary display area 302; an altitude scale 304 for the aircraft; a lateral distance scale 306 for the aircraft; a graphical representation of the host aircraft 308; and graphical representations of neighboring aircraft 310, 312, and 314. Altitude scale 304 may include alphanumeric indicia of altitude values in any convenient scale (in FIG. 3, altitude scale 304 includes numerical values in 10,000 foot increments). In this embodiment, altitude scale 304 has a reference altitude that corresponds to a fixed altitude, e.g., ground. In other words, the bottom of altitude scale 304 represents an altitude of zero feet. Lateral distance scale 306 may include alphanumeric indicia of distance values in any convenient scale (in FIG. 3, lateral distance scale 306 includes numerical values in increments of ten nautical miles). In this embodiment, lateral distance scale 306 has a zero reference point that corresponds to the position of the host aircraft. In other words, the graphical representation of the host aircraft 308 is aligned with the zero lateral distance mark on lateral distance scale 306.

Notably, the graphical representations of the host aircraft 308 and neighboring aircraft 310, 312, and 314 are positioned on VSD 300 relative to altitude scale 304 and lateral distance scale 306 in accordance with the current aircraft status data. Unlike traditional VSDs, the graphical representation of the host aircraft 308 need not be positioned at the leftmost side of the screen. Rather, the graphical representation of the host aircraft 308 is positioned near the center of primary display area 302, which accommodates the display of neighboring aircraft on either side of the host aircraft. The graphical representations of the neighboring aircraft 310, 312, and 314 are positioned on VSD 300 in a manner that indicates the actual respective altitudes of the neighboring aircraft relative to the host aircraft, and in a manner that indicates the actual lateral separation of the neighboring aircraft relative to the host aircraft. Consequently, the lateral distance and vertical distance between the host aircraft and each neighboring aircraft can be quickly and easily determined from the VSD using altitude scale 304 and lateral distance scale 306.

The graphical representations of the host aircraft 308 and the neighboring aircraft 310, 312, and 314 are rendered on VSD 300 such that they correspond to a forward view, as depicted in FIG. 3. In other words, the graphical representations of the aircraft on VSD 300 resemble the pilot's view out of the cockpit window. Thus, the graphical representation of the neighboring aircraft 310 represents an aircraft that is currently positioned below and on the port side of the host aircraft, while the graphical representation of the neighboring aircraft 314 represents an aircraft that is currently positioned above and on the starboard side of the host aircraft.

VSD 300 may include graphical features and/or it may employ certain visually distinguishable characteristics to convey information or meaning. For example, the graphical representation of the host aircraft 308 is rendered in a visually distinguishable manner, relative to the graphical representations of the neighboring aircraft 310, 312, and 314. In this regard, the different visually distinguishable characteristics may correspond to any of the following characteristics, individually or in any combination thereof: different colors; different brightness; different transparency levels; different translucency levels; different line patterns; different line thickness; different shapes; different sizes; different flicker patterns; different focus levels; different sharpness levels; different clarity levels; and different orientation/alignment. In preferred embodiments, for example, the graphical representation of the host aircraft 308 is rendered in a first color (such as green) that is easily distinguishable from other color schemes that might be used for the graphical representations of the neighboring aircraft 310, 312, and 314.

VSD 300 may also include marker, trace, or indicator lines that correspond to the position of the aircraft icons. This embodiment employs marker lines that indicate the lateral position of the aircraft on lateral distance scale 306. For this example, a marker line 316 is aligned with the graphical representation of the neighboring aircraft 310, and marker line 316 indicates a lateral distance of approximately 25 nautical miles, relative to the host aircraft. Notably, a marker line 318 is aligned with the graphical representation of the host aircraft 308, and marker line 318 will be "pinned" to the zero reference point on lateral distance scale 306.

VSD 300 may also utilize labeling to indicate the neighboring aircraft. This embodiment renders alphanumeric text labels on or near the graphical representations of the neighboring aircraft 310, 312, and 314. These text labels may, for example, represent the respective flight numbers of the neighboring aircraft. In FIG. 3, the graphical representation of neighboring aircraft 310 also includes the text label PU790, the graphical representation of neighboring aircraft 312 also includes the text label BI324, and the graphical representation of neighboring aircraft 314 also includes the text label KP456. Although not depicted on VSD 300, the graphical representation of the host aircraft 308 may also include a respective text label.

Certain embodiments of VSD 300 might utilize trend vectors when applicable. In this context, a trend vector is associated with a given aircraft, i.e., the host aircraft or a neighboring aircraft. VSD 300 depicted in FIG. 3 depicts a scenario where the graphical representation of the neighboring aircraft 312 includes a trend vector 320 that indicates movement of that neighboring aircraft in a direction toward the host aircraft. Similarly, the graphical representation of the neighboring aircraft 314 includes a trend vector 322 that indicates movement of that neighboring aircraft in a direction toward the host aircraft. Notably, aircraft that are traveling at a relatively steady lateral distance relative to the host aircraft will be identified by a graphical representation that includes no associated trend vector (as shown for the graphical representation of the neighboring aircraft 310). Although not depicted in FIG. 3, VSD 300 may additionally (or alternatively) employ trend vectors that indicate altitude changes. Moreover, a trend vector as described above could be rendered with visually distinguishable characteristics and/or with different lengths that indicate one or more trending characteristics, such as the rate at which a neighboring aircraft is moving toward or away from the host aircraft.

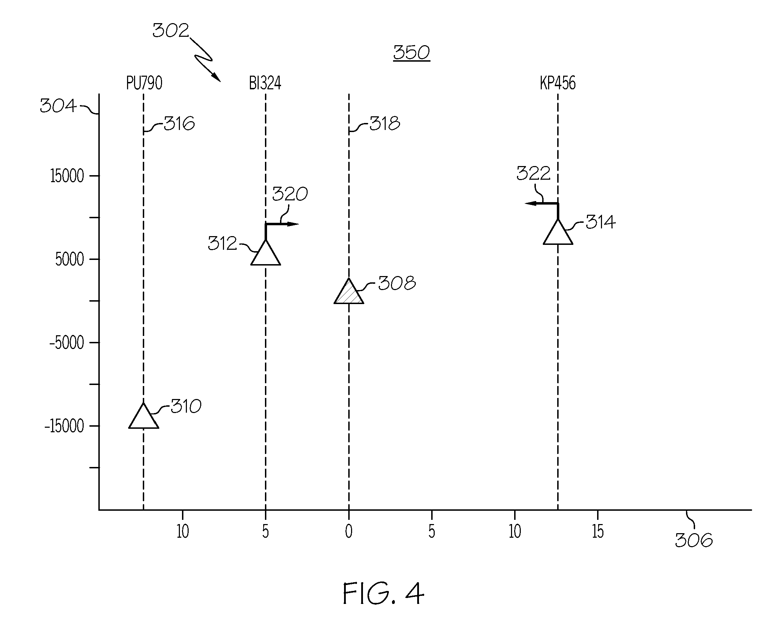

FIG. 4 is a schematic representation of a flight deck display screen having another exemplary VSD 350 rendered thereon. VSD 350 displays the same aircraft altitude conditions as that displayed by VSD 300. Indeed, many of the features and graphical elements are similar or identical. In contrast to VSD 300, altitude scale 304 of VSD 350 has a reference altitude (e.g., a value of zero) that corresponds to the current altitude of the host aircraft. Accordingly, the graphical representation of the host aircraft 308 is displayed such that it is "pinned" to the zero altitude mark on altitude scale 304. Altitudes above the host aircraft position are considered to be positive altitudes, while altitudes below the host aircraft position are considered to be negative altitudes.

Compared to VSD 300, VSD 350 employs a different range and markings for lateral distance scale 306. In this regard, VSD 350 includes lateral distance markings corresponding to intervals of five nautical miles (rather than ten nautical miles as used by VSD 300). In practice, the overall range of altitude scale 304, the marking increments of altitude scale 304, the overall range of lateral distance scale 306, and/or the marking increments of lateral distance scale 306 could be user-configurable, user-selectable, or user-switchable. Such flexibility allows the pilot or flight crew member to change the appearance and resolution of the VSD as needed.

VSD 350 displays flight indicator labels for the neighboring aircraft at or near the top of primary display area 302 (rather than on or near the graphical representations of the aircraft). As shown in FIG. 4, the labels PU790, BI324, and KP456 are displayed at a height that is near the upper end of altitude scale 304. Rendering these alphanumeric text labels near the top of primary display area 302 may be preferred by some users to reduce clutter near the center of primary display area 302.

As mentioned above with reference to process 200, a VSD as described herein preferably includes a graphical representation of a conflict zone surrounding the host aircraft icon. In this regard, FIG. 5 is a schematic representation of a flight deck display screen having an exemplary VSD 380 rendered thereon. VSD 380 shares a number of basic features and elements with VSD 300 and VSD 350, and such common features, functions, and aspects will not be redundantly described here. Moreover, FIG. 5 has been simplified for ease of description and for clarity.

The current state of VSD 380 depicted in FIG. 5 contemplates the presence of two neighboring aircraft near the host aircraft, one of which has entered the designated conflict zone of the host aircraft. Thus, VSD 380 includes the graphical representation of the host aircraft 308, a graphical representation of the intruding aircraft 382, and a graphical representation of the non-intruding aircraft 384. Notably, VSD 380 also includes a visually distinguishable conflict zone 386 surrounding the graphical representation of the host aircraft 308. Although the actual conflict zone for this embodiment resembles a sphere having a radius of about ten nautical miles, VSD 380 renders conflict zone 386 as a circle. The ten nautical mile radius of conflict zone 386 is appropriately scaled relative to lateral distance scale 306. Although any suitable visual scheme can be employed (see above description of different possible visually distinguishable characteristics), preferred embodiments render conflict zone 386 in a different color, relative to other sections of primary display area 302. For example, conflict zone 386 could be rendered in a contrasting color or shade such as light gray, versus black for the other sections of primary display area 302.

VSD 380 depicts a situation where a neighboring aircraft has intruded into the conflict zone of the host aircraft. Consequently, the graphical representation of the intruding aircraft 382 is positioned at least partially within conflict zone 386. Moreover, the graphical representation of the intruding aircraft 382 is rendered with visually distinguishable characteristics, relative to the graphical representation of the non-intruding aircraft 384, relative to graphical representations of other neighboring aircraft (not shown in FIG. 5) that are outside conflict zone 386, and relative to the graphical representation of the host aircraft 308. For example, the graphical representation of the host aircraft 308 might be rendered in a green color, the graphical representation of the non-intruding aircraft 384 might be rendered in a distinguishable white or blue color, and the graphical representation of the intruding aircraft 382 might be rendered in an distinguishable amber or orange color.

Although not required, this embodiment of VSD 380 also includes graphical indicia of a required navigation performance (RNP) boundary 388 for the host aircraft. In practice, an RNP boundary represents a somewhat restricted range or area in which an aircraft should travel during its flight plan. The RNP boundary may be calculated as a deviation from the designated flight path, in nautical miles. For example, using lateral distance scale 306 as a reference, the graphical indicia of RNP boundary 388 indicates a deviation range of approximately two nautical miles (in any direction) relative to the current designated position of the host aircraft. The graphical indicia of RNP boundary 388 can be used in certain embodiments to further enhance the navigational performance awareness in the cockpit.

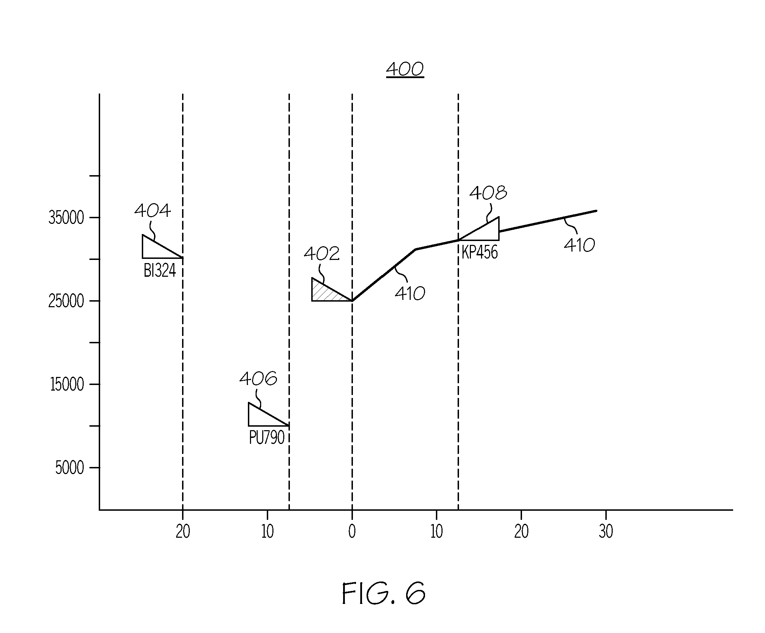

FIGS. 3-5 depict VSDs that correspond to a forward or pilot's view. FIGS. 6 and 7 depict VSDs that instead correspond to a side profile view. Certain features, functions, and aspects of these side profile VSDs are similar or identical to those described above with reference to FIGS. 3-5. For simplicity and brevity, such common features, functions, and characteristics will not be redundantly described here.

Referring to FIG. 6, a VSD 400 includes graphical representations of a host aircraft 402 and three neighboring aircraft 404, 406, and 408. In this side view orientation, the graphical icons of the aircraft are rendered as triangles (or as any shape that is capable of indicating direction of travel). Here, the graphical representation of the host aircraft 402 points in the direction of travel of the host aircraft, i.e., to the right of the screen. Using this directional scheme, VSD 400 indicates that two neighboring aircraft are traveling in the same general direction as the host aircraft, while one neighboring aircraft is traveling in a generally opposite direction. This explains why the graphical representation of the neighboring aircraft 408 is pointing toward the graphical representation of the host aircraft 402. The side view perspective of VSD 400 facilitates the rendering of a graphical representation of the vertical profile 410 of the host aircraft. The actual vertical profile of the host aircraft corresponds to its current flight plan, and the graphical representation of the vertical profile 410 indicates the planned altitude of the host aircraft at various lateral distances beyond its current location.

FIG. 7 is a schematic representation of a flight deck display screen having an exemplary VSD 450 rendered thereon. The current state of VSD 450 depicted in FIG. 7 contemplates the presence of three neighboring aircraft near the host aircraft, one of which has entered the designated conflict zone of the host aircraft. Thus, VSD 450 includes the graphical representation of the host aircraft 402, a graphical representation of the intruding aircraft 452, and graphical representations of two non-intruding aircraft 454 and 456. FIG. 7 also depicts the visually distinguishable conflict zone 458 surrounding the graphical representation of the host aircraft 402.

VSD 450 depicts a situation where a neighboring aircraft has intruded into the conflict zone of the host aircraft and where there might be a vertical conflict within the conflict zone. Consequently, the graphical representation of the intruding aircraft 452 is rendered with visually distinguishable characteristics, relative to the graphical representation of the non-intruding aircraft 454 and 456, relative to graphical representations of other neighboring aircraft (not shown in FIG. 7) that are outside conflict zone 458, and relative to the graphical representation of the host aircraft 402.

Although not required, this embodiment of VSD 450 also includes graphical indicia of the RNP boundary 460 for the host aircraft. In this side view perspective, the graphical indicia of the RNP boundary 460 appears as a thick line or two parallel lines that indicate the desired navigation boundary for the host aircraft. The particular scenario depicted in FIG. 7 involves a vertical conflict because the vertical profile of the intruding aircraft intersects the vertical profile and/or the RNP boundary of the host aircraft within the defined conflict zone. When this situation arises, VSD 450 will include a graphical representation of the vertical profile 462 of the intruding or conflicting aircraft. In preferred embodiments, the graphical representation of the vertical profile 462 is rendered with visually distinguishable characteristics, relative to the graphical representation of the vertical profile or RNP boundary 460 of the host aircraft. Although any visual scheme may be employed (as mentioned previously), the vertical profiles may be displayed using the same color scheme utilized to render the graphical representations of the aircraft. For example, VSD 450 may display the graphical representation of the intruding aircraft 452 and its vertical profile 462 in red, and display the graphical representation of the host aircraft 402 and its RNP boundary 460 in green.

The flight deck display system can be suitably configured to accommodate switching of display modes during flight. For example, the system could allow the user to switch between the forward view (see FIGS. 3-5) and the side profile view (see FIGS. 6 and 7) as needed. Alternatively, the system could use two screens to simultaneously display both views. The system could also be configured to allow the user to switch between the ground referenced altitude mode (see FIG. 3) or the host aircraft referenced altitude mode (see FIG. 5). Moreover, although the figures depict embodiments that employ two-dimensional renderings, the flight deck system could be suitably configured to generate three-dimensional or perspective view renderings.

Certain display features of the VSDs describe herein can be subjected to filtering, configuration settings, user preferences, and the like. For example, it may not be necessary to display the vertical profiles of all neighboring aircraft. Accordingly, the system may selectively display the vertical profiles based upon criteria such as distance from the host aircraft, an amount of time from the current time, proximity to the conflict zone of the host aircraft, etc. Alternatively (or additionally), the display of all vertical profiles and/or the removal of all vertical profiles could be initiated at the request of the user. The system may also implement a conflict probe mode that could be automatically activated or initiated at the request of a user. In this conflict probe mode, only conflicting aircraft located within the conflict zone of the host aircraft are displayed, along with the host aircraft and respective vertical profiles. This mode will help the flight crew concentrate on the potential conflict scenario and facilitate quick and intuitive communication with air traffic controllers. Moreover, conventional graphics rules and methodologies may be used to resolve clutter on the display, overlapping graphical elements, and the like.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A flight deck display system (100) for a host aircraft, the system (100) comprising:
an aircraft-to-aircraft data communication module (124) that receives current status data for one or more neighboring aircraft;
a processor architecture (104) coupled to the aircraft-to-aircraft data communication module (124), the processor architecture (104) being configured to obtain and process the current status data along with current host aircraft status data, and the processor architecture (104) being configured to generate image rendering display commands based upon the current status data and the current host aircraft status data; and
a display element (106) coupled to the processor architecture (104) and configured to receive the image rendering display commands and, in response thereto, to render a vertical situation display (VSD) (300, 350, 380, 400, 450) that includes graphical representations of the host aircraft (308, 402) and the one or more neighboring aircraft (310, 312, 314, 382, 384, 404, 406, 408, 452, 454, 456) the graphical representations conveying relative altitudes of the host aircraft (308, 402) and the one or more neighboring aircraft.

2. The system (100) of claim 1, wherein the current status data comprises respective flight plan data for each of the neighboring aircraft (310, 312, 314, 382, 384, 404, 406, 408, 452, 454, 456).

3. The system (100) of claim 1, wherein the current status data comprises respective geographic position data for each of the neighboring aircraft (310, 312, 314, 382, 384,404,406,408,452,454,456).

4. The system (100) of claim 1, wherein the current host aircraft status data comprises flight plan data for the host aircraft (308, 402).

5. The system (100) of claim 1, wherein the current host aircraft status data comprises geographic position data for the host aircraft (308, 402).

6. The system (100) of claim 1, wherein the VSD (300, 350, 380, 400, 450) comprises:
an altitude scale (304) for the host aircraft (308, 402) and the neighboring aircraft (310, 312, 314, 382, 384, 404, 406, 408, 452, 454, 456); and
a lateral distance scale (306) for the host aircraft (308, 402) and the neighboring aircraft (310, 312, 314, 382, 384, 404, 406, 408, 452, 454, 456).

7. The system (100) of claim 6, wherein the altitude scale (304) has a reference altitude corresponding to the current altitude of the host aircraft (308, 402).

8. The system (100) of claim 1, wherein the graphical representations of the host aircraft (308, 402) and the neighboring aircraft (310, 312, 314, 382, 384, 404, 406, 408, 452, 454, 456) are rendered such that they correspond to a forward view.

9. The system (100) of claim 1, wherein the graphical representations of the host aircraft (308, 402) and the neighboring aircraft (310, 312, 314, 382, 384, 404, 406, 408, 452, 454, 456) are rendered such that they correspond to a side profile view.

10. The system (100) of claim 1, wherein:
the VSD (300, 350, 380, 400, 450) comprises a visually distinguishable conflict zone surrounding the graphical representation of the host aircraft (308, 402); and
graphical representations of neighboring aircraft (310, 312, 314, 382, 384, 404, 406, 408, 452, 454, 456) that are at least partially within the conflict zone are rendered with visually distinguishable characteristics, relative to graphical representations of neighboring aircraft (310, 312, 314, 382, 384, 404, 406, 408, 452, 454, 456) that are outside the conflict zone.
